# DEMANDE DE BREVET EUROPEEN

(11) **EP 4 269 171 A1**
(43) Date de publication de la demande: **01.11.2023**
(21) Numéro de dépôt: 23168090.1
(22) Date de dépôt: 14.04.2023
(51) Int. Cl.: B60N 2/841, B60N 2/853, B60N 2/856

(54) **SYSTÈME SUPPORT POUR APPUI-TÊTE DE SIÈGE AUTOMOBILE**

(30) Priorité: 29.04.2022 FR 2204062
(71) Demandeur: FAURECIA Sièges d'Automobile, 92000 Nanterre (FR)
(72) Inventeur: BULLE, Hervé, 70400 HERICOURT (FR); CHOFFAT, Martial, 90400 DORANS (FR); YOGESH, Kapse, 411-026 PUNE (IN)
(74) Mandataire: Plasseraud IP

(57) **Abrégé**

La présente divulgation concerne un système support pour appui-tête d'un siège d'un véhicule automobile qui comprend une partie fixe solidaire du dossier et une partie mobile en rotation autour de la partie fixe entre une position d'utilisation et position de rangement.

La partie mobile comprend au moins un bras configuré pour fixer ledit appui-tête et un axe de pivotement solidaire en rotation avec ledit au moins un bras, et l'axe de pivotement est contraint en rotation par un premier moyen élastique de la position d'utilisation à la position de rangement.

La partie fixe comprend un dispositif de verrouillage configuré pour bloquer la partie mobile dans la position d'utilisation et qui peut déverrouiller pour libérer la rotation de la partie mobile autour de la partie fixe par le premier moyen élastique jusqu'à la position de rangement.

## Description

### Domaine technique

La présente divulgation relève du domaine des équipements intérieurs automobiles, plus particulièrement du domaine des appui-têtes de sièges automobiles. La présente divulgation concerne un système support pour un appui-tête de siège automobile.

### Technique antérieure

Un appui-tête d'un siège automobile présente généralement une position d'utilisation et une position de rangement. La position d'utilisation peut correspondre à la position pour laquelle la tête d'un occupant du véhicule, par exemple le conducteur ou un passager, est en appui sur l'appui-tête. La position de rangement peut correspondre à une position dans laquelle l'appui-tête est rabattu. Afin de passer d'une position d'utilisation à une position de rangement, l'appui-tête peut comprendre un ensemble d'éléments structurels permettant son pivotement.

Par exemple, il est connu du document EP1862352 B1 de placer l'appui-tête en position de rangement de manière à améliorer la visibilité à travers la vitre arrière d'un véhicule pour un conducteur du véhicule. Le basculement dans la position de rangement est effectué par le pivotement de l'appui-tête autour d'un axe compris dans l'appui-tête.

Il est connu du document EP1190893 B1 de placer l'appui-tête en position de rangement de manière à éviter tout endommagement ou coincement d'un siège automobile lors de son rabattement pour faire entrer une personne au sein d'un véhicule trois portes. Similairement au document EP1862352 B1, le basculement dans la position de rangement est effectué par le pivotement de l'appui-tête autour d'un axe compris dans l'appui-tête.

Un des inconvénients des solutions existantes précitées est que l'encombrement causé par l'appui-tête demeure important, en particulier lorsqu'il est nécessaire de manoeuvrer en marche arrière et qu'une certaine visibilité de l'arrière est requise.

### Résumé

La présente divulgation vient améliorer la situation.

Ainsi, il est proposé un système support pour appui-tête d'un siège d'un véhicule automobile, ledit système support étant destiné à être intégré en haut d'un dossier de siège dudit véhicule, le système support comprenant une partie fixe solidaire du dossier et une partie mobile en rotation autour de la partie fixe entre une position d'utilisation et position de rangement,
la partie mobile comprenant au moins un bras configuré pour fixer ledit appui-tête, et un axe de pivotement solidaire en rotation avec ledit au moins un bras, l'axe de pivotement étant contraint en rotation par un premier moyen élastique de la position d'utilisation à la position de rangement,
la partie fixe comprenant :
   - un dispositif de verrouillage configuré pour bloquer la partie mobile dans la position d'utilisation, le dispositif de verrouillage comprend un premier élément de verrouillage solidaire de la partie fixe et un deuxième de verrouillage solidaire en rotation de l'axe de pivotement, ledit premier élément de verrouillage configuré pour passer d'une première position dans laquelle ledit premier élément de verrouillage forme une butée pour le deuxième élément de verrouillage dans la position d'utilisation en assurant le blocage en rotation de l'axe de pivotement en s'opposant au premier moyen élastique jusqu'à une deuxième position dans laquelle le premier élément de verrouillage libère la rotation de l'axe de pivotement provoquant la rotation de la partie mobile autour de la partie fixe par le premier moyen élastique jusqu'à ladite position de rangement,
   - un actionneur motorisé configuré pour effectuer un déplacement du premier élément de verrouillage de la première à la deuxième position.

Ainsi, avantageusement, il est possible d'augmenter sensiblement la visibilité à l'arrière de l'habitacle du véhicule, lors de manoeuvre en marche arrière par exemple, en libérant efficacement l'encombrement d'un ou plusieurs appui-têtes, par exemple les appui-têtes des sièges passagers arrières.

Par butée, il peut être entendu un contact physique entre le premier élément de verrouillage et le deuxième élément de verrouillage.

Dans un ou plusieurs modes de réalisation, le premier élément de verrouillage est un axe de verrouillage, orienté sensiblement suivant une direction parallèle à l'axe de pivotement, configuré pour coulisser suivant la direction de l'axe de verrouillage depuis la première position jusqu'à la deuxième position, et inversement.

Dans un ou plusieurs modes de réalisation, le deuxième élément de verrouillage comprend au moins une dent et le premier élément de verrouillage est un corps de verrouillage mobile entre la première et la deuxième position sur l'axe de verrouillage, le corps de verrouillage formant la butée pour la position d'utilisation et comprenant au moins une encoche, ladite au moins une dent traversant par alignement ladite au moins une encoche lors du passage de la première à la deuxième position.

Dans un ou plusieurs modes de réalisation, la partie fixe comprend un bras de levier monté pivotant, une première extrémité du bras de levier coopérant avec l'actionneur motorisé et une deuxième extrémité étant engagé avec le premier élément de verrouillage, le cas échéant l'axe de verrouillage lorsque le premier élément de verrouillage est un axe de verrouillage, ledit bras de levier est configuré pour déplacer le premier élément de verrouillage de la première à la deuxième position par déplacement de la première extrémité du bras de levier par ledit actionneur motorisé.

Dans un ou plusieurs modes de réalisation, l'actionneur motorisé est configuré pour passer d'un premier état dans lequel ledit premier élément de verrouillage est dans la première position jusqu'à un deuxième état pour lequel le premier élément de verrouillage est dans une deuxième position, et dans lequel le premier élément de verrouillage, le cas échéant l'axe de verrouillage lorsque le premier élément de verrouillage est un axe de verrouillage, est contraint en déplacement par un deuxième moyen élastique de la deuxième position jusqu'à la première position qui provoque éventuellement à son tour la réversibilité de l'actionneur du deuxième état jusqu'au premier état, le cas échéant par le bras de levier,
le premier élément de verrouillage étant déplacé par le deuxième moyen élastique de la deuxième à la première position lors de la rotation de l'axe de pivotement de la position de rangement à la position d'utilisation.

Dans un ou plusieurs modes de réalisation, la rotation de l'axe de pivotement est mise en oeuvre par un pivotement manuel dudit au moins un bras de levier de la position de rangement à la position d'utilisation.

Dans un ou plusieurs modes de réalisation, l'actionneur et la première extrémité du bras de levier coopèrent en simple appuie.

Dans un ou plusieurs modes de réalisation, la partie fixe comprend deux parois entre lesquelles l'axe de pivotement est articulé à ses extrémités, le premier élément de verrouillage, le deuxième élément de verrouillage, l'axe de pivotement et l'actionneur motorisé, voire le cas échéant le bras de levier, étant agencés en recouvrement suivant la direction de l'axe de pivotement entre les deux parois da la partie fixe.

Ainsi, avantageusement, il est possible d'obtenir un système support compact permettant de libérer efficacement l'encombrement d'un appui-tête sans augmenter la complexité du système support.

Dans un ou plusieurs modes de réalisation, la deuxième extrémité du bras de levier comprend une saillie et le premier élément verrouillage comprend au moins une deuxième encoche en prise avec ladite saillie, le déplacement de ladite saillie par l'actionneur motorisé déplace le deuxième élément de verrouillage de la première à la deuxième position.

Dans un ou plusieurs modes de réalisation, la réversibilité de l'actionneur du deuxième état jusqu'au premier état est mise en oeuvre par un ressort interne audit actionneur motorisé.

Dans un ou plusieurs modes de réalisation, l'actionneur motorisé est un actionneur électrique comprenant un coulisseau actionné par un électro-aimant et rappeler par un ressort interne audit actionneur électrique.

La présente divulgation porte également sur un siège de véhicule comprenant une assise et un dossier, ainsi qu'un système support selon la présente divulgation comprenant la partie fixe solidaire d'une portion haute du dossier, ladite partie mobile supportant au moins un appui-tête.

Dans un ou plusieurs modes de réalisation, le bras de levier est courbe de sorte que l'appui-tête s'échappe en dessous de l'extrémité supérieure du dossier dans la position de rangement de la partie mobile.

La présente divulgation porte également sur véhicule comportant :
- un siège conducteur et
- au moins un siège selon la présente divulgation sur une rangée en arrière du siège conducteur,
- une interface utilisateur accessible de l'occupant du siège conducteur configurée pour assurer la commande de l'actionneur pour provoquer le passage de la partie mobile de la position d'utilisation jusqu'à la position de rangement.

### Brève description des dessins

D'autres caractéristiques, détails et avantages apparaîtront à la lecture de la description détaillée ci-après, et à l'analyse des dessins annexés, sur lesquels :
**Fig. 1**

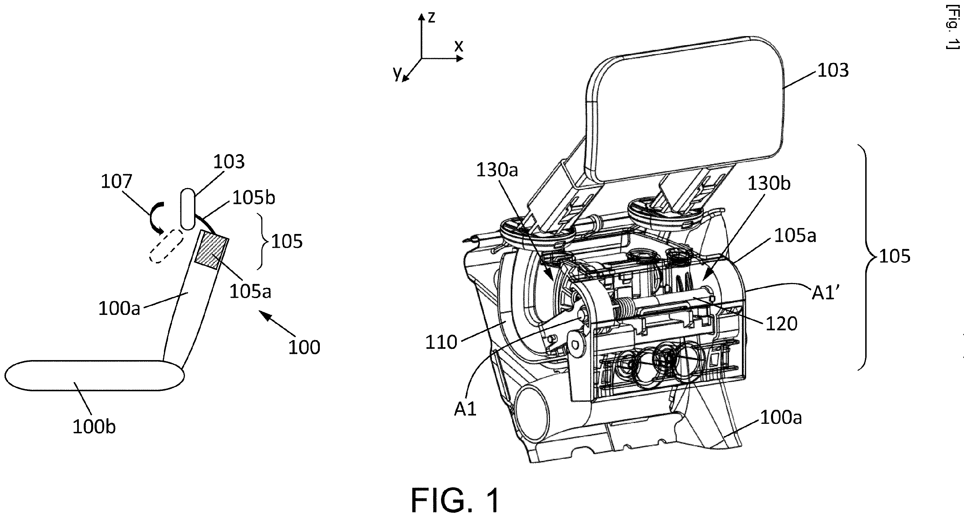

   [Fig. 1] présente une vue en perspective du système support pour appui-tête monté sur le dossier d'un siège d'un véhicule automobile.
**Fig. 2a**

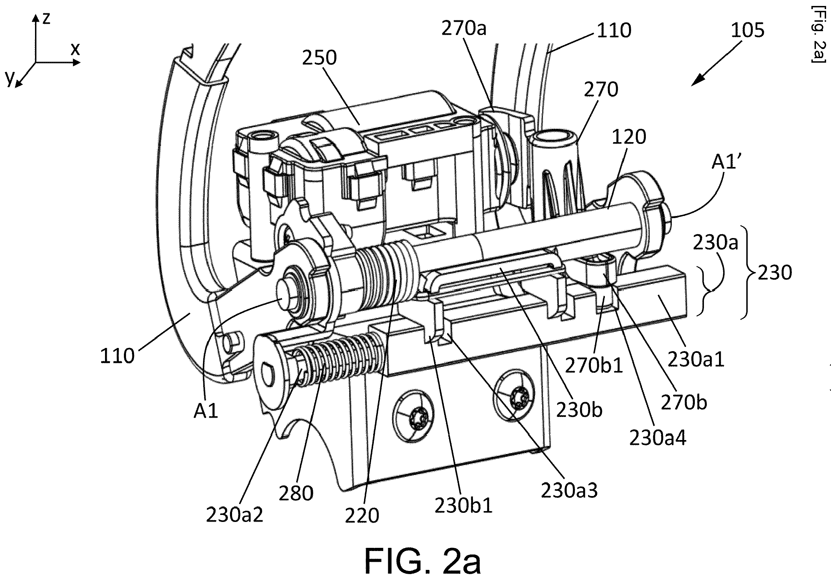

   [Fig. 2a] illustre une vue en perspective du système support en position d'utilisation.
**Fig. 2b**

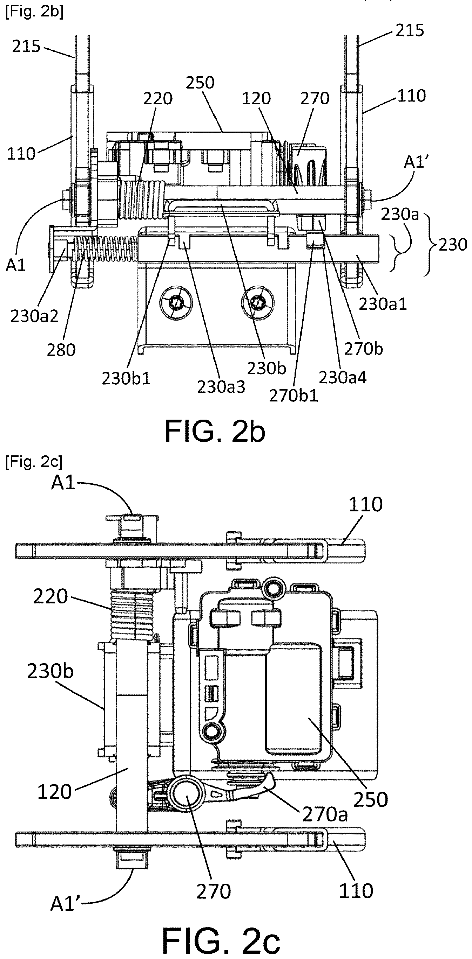

   [Fig. 2b] illustre une vue de face du système support en position d'utilisation.
**Fig. 2c**
   [Fig. 2c] illustre une vue de dessus du système support en position d'utilisation.
**Fig. 3a**

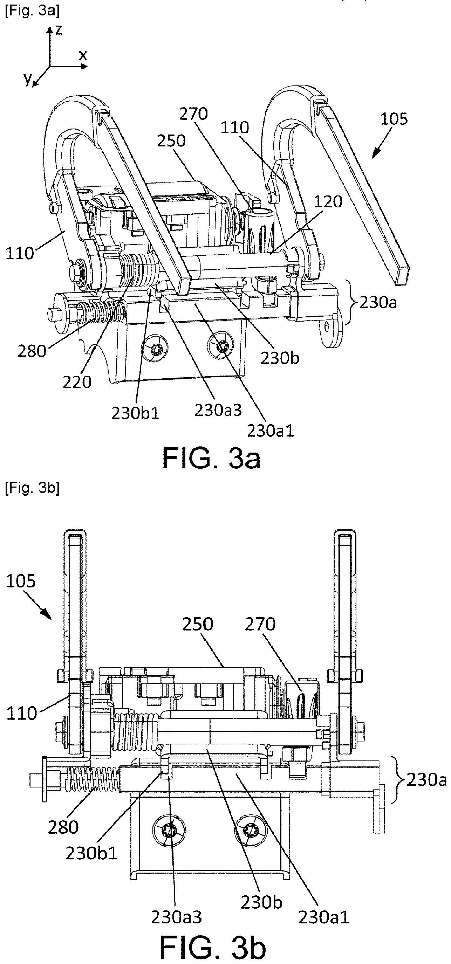

   [Fig. 3a] illustre une vue en perspective du système support en position de rangement.
**Fig. 3b**
   [Fig. 3b] illustre une vue de face du système support en position de rangement.

### Description des modes de réalisation

La figure 1 présente une vue en perspective du système support pour appui-tête monté sur le dossier d'un siège d'un véhicule automobile.

Le siège de véhicule 100 peut comprendre un dossier 100a et une assise 100b, ainsi qu'un appui-tête connecté au système support par une ou plusieurs tiges. L'appui-tête peut comprendre un coussin configuré pour recevoir la tête d'un occupant du véhicule automobile.

Le système support 105 peut être destiné à être intégré en haut du dossier 100a du siège 100 du véhicule. Le système support 105 peut comprendre une partie fixe solidaire 105a du dossier et une partie mobile 105b en rotation 107 autour de la partie fixe permettant de pivoter l'appui-tête 103 entre une position d'utilisation et une position de rangement.

De plus, la partie mobile 105b peut comprendre un axe de pivotement 120 solidaire en rotation avec le au moins un bras 110.

La partie fixe 105 peut comprendre deux parois (ou flasques) 130a,130b entre lesquelles l'axe de pivotement 120 est articulé à ses extrémités. Chacun des bras 110 peut être monté à l'une des extrémités de l'axe de pivotement par l'intermédiaire de liaisons pivots respectives A1, A1'.

Par position d'utilisation, il peut être entendu une position dans laquelle la tête du conducteur du véhicule automobile vient en appui lors d'une conduite du véhicule par le conducteur. Par position de rangement, il peut être entendu une position dans laquelle l'appuie-tête est pivoté vers l'avant de sorte que l'appuie-tête ou le coussin de l'appuie-tête forme un angle entre la position de rangement et la position d'utilisation d'au moins 60 degrés, de préférence d'au moins 63 degrés.

Dans un ou plusieurs exemples, la position de rangement peut être une position de non-utilisation (dit « non-use position » en anglais) correspondant à une position d'inconfort pour un occupant du véhicule installé au niveau de l'appui-tête en position de non-utilisation.

Le véhicule peut comprendre une interface utilisateur accessible par exemple de l'occupant du siège conducteur configurée pour assurer la commande de pivotement de la partie mobile autour de la partie fixe.

La partie mobile 105b peut comprendre au moins un bras 110 configuré pour fixer ledit appui-tête 103.

Les figures 2a à 2c illustrent le système support en position d'utilisation.

La figure 2a illustre une vue en perspective du système support en position d'utilisation, la figure 2b illustre une vue de face du système support en position d'utilisation, la figure 2c illustre une vue de dessus du système support en position d'utilisation.

À noter que certaines parties de la figure 1 (e.g. parois) présentant le système support en perspective sont volontairement cachées afin de faciliter la compréhension de la structure.

Selon un exemple, le bras (ou l'au moins un bras) 110 peut être configuré de manière à ce qu'une tige 215 de l'appui-tête puisse être insérée dans le bras. Selon un autre exemple, le bras peut être configuré de manière à être inséré dans un réceptacle compris dans l'appui-tête. Par exemple, le bras 110 peut comprendre une tige 215 pouvant être insérée dans un appui-tête.

En outre, dans un ou plusieurs exemples, le bras de levier peut être courbe de sorte que l'appui-tête s'échappe en dessous de l'extrémité supérieure (haute) du dossier dans la position de rangement de la partie mobile.

En outre, de manière préférentielle, la partie mobile 105b peut comprendre au moins deux bras solidaires en rotation avec l'axe de pivotement 120. Par exemple, chaque bras 110 peut être connecté à une extrémité respective de l'axe de pivotement 120 et fixé respectivement l'appui-tête.

De plus, l'axe de pivotement 120 peut être contraint en rotation par un premier moyen élastique 220 de manière à passer automatiquement de la position d'utilisation à la position de rangement.

Une première extrémité du moyen élastique 220 peut être fixée à l'une des parois de la partie fixe et une deuxième extrémité du moyen élastique peut être fixée sur l'axe de pivotement ou sur toute(s) pièce(s) solidaire(s) en rotation avec l'axe de pivotement.

Ainsi, le premier moyen élastique 220 peut être configuré pour accumuler une énergie élastique lorsque l'appui-tête et/ou l'au moins un bras 110 passe, par exemple manuellement, d'une position de rangement à une position d'utilisation via la rotation de l'axe de pivotement, et peut être configuré pour restituer de l'énergie élastique en forçant la rotation de l'axe de pivotement (i.e. rotation ou pivotement automatique) et donc de l'appui-tête (ou du au moins un bras) de la position d'utilisation à la position de rangement.

Dans un ou plusieurs modes de réalisations, le premier est moyen élastique peut être un ressort de torsion monté autour de l'axe de pivotement.

En outre, la partie fixe peut comprendre un dispositif de verrouillage 230 configuré pour bloquer la partie mobile dans la position d'utilisation. Dans ce but, le dispositif de verrouillage 230 peut comprendre un premier élément de verrouillage 230a solidaire de la partie fixe et un deuxième élément de verrouillage 230b solidaire en rotation de l'axe de pivotement 120.

Le premier élément de verrouillage 230a peut être configuré pour passer d'une première position dans laquelle le premier élément de verrouillage 230a forme une butée pour le deuxième élément de verrouillage 230b dans la position d'utilisation en assurant le blocage en rotation de l'axe de pivotement en s'opposant au premier moyen élastique, par exemple un ressort comme un ressort de rappel, jusqu'à une deuxième position dans laquelle le premier élément de verrouillage 230a libère la rotation de l'axe de pivotement 120 provoquant la rotation de la partie mobile, c'est-à-dire les bras 110, autour de la partie fixe par le premier moyen élastique jusqu'à la position de rangement.

Selon un ou plusieurs exemples, le premier élément de verrouillage 230a peut être un axe de verrouillage qui est orienté parallèlement à l'axe de pivotement. Le premier élément ou l'axe de verrouillage peut être configuré pour coulisser suivant la direction de l'axe de verrouillage depuis la première position jusqu'à la deuxième position, et inversement.

Dans ce but, le premier élément de verrouillage ou l'axe de verrouillage peut être un corps de verrouillage 230a1 mobile entre la première et la deuxième position sur l'axe de verrouillage 230a2, le corps de verrouillage 230a1 formant la butée pour la position d'utilisation. Par exemple, le deuxième élément de verrouillage 230b peut venir en appui, c'est à dire en contact physique, sur la surface du corps de verrouillage 230a1. Selon un exemple, le deuxième élément de verrouillage peut présenter une forme complémentaire à la forme de la surface du corps de verrouillage.

Dans un ou plusieurs modes de réalisation, le corps de verrouillage 230a1 monté sur l'axe de verrouillage 230a2 qui est guidé en coulissement suivant la direction de l'axe de verrouillage, en bloquant toute possibilité de rotation autour de l'axe, peut être de forme non circulaire et configuré pour se déplacer que par translation suivant la direction de l'axe de verrouillage. Selon un exemple, le corps de verrouillage peut être de forme rectangulaire et guidé dans des guides tubulaires non circulaires, par exemple rectangulaires, sur chacun des deux extrémités des deux parois.

Afin de libérer la rotation de l'axe de pivotement vers la position de rangement, le deuxième élément de verrouillage 230b peut comprendre au moins une dent 230b1 et le corps de verrouillage peut comprendre au moins une encoche 230a3 qui coopèrent par un alignement. Lorsque ladite au moins une encoche 230a est alignée à l'au moins une dent 230b1, cette dernière traverse l'au moins une encoche 230a3 lors du passage de la première à la deuxième position et la rotation forcée de l'axe de pivotement par le premier moyen élastique 220.

En position d'utilisation, l'au moins une dent peut présenter une forme complémentaire avec la surface du corps de verrouillage.

À titre d'exemple, le deuxième élément de verrouillage 230b peut être une fourche comprenant au moins deux dents 230b1, décalées l'une par rapport à l'autre suivant la direction de l'axe de pivotement et qui sont configurées pour passer respectivement au travers d'au moins deux encoches 230a3 comprises sur le corps de verrouillage (ou le premier élément de verrouillage) lors du passage de la première à la deuxième position, permettant ainsi la rotation de l'axe de pivotement vers la position de rangement.

En outre, le support fixe peut comprendre un actionneur motorisé 250 configuré pour effectuer le déplacement du premier élément de verrouillage 230a (ou axe de verrouillage) de la première à la deuxième position. Plus spécifiquement, l'actionneur motorisé 250 peut être configuré pour passer d'un premier état dans lequel le premier élément de verrouillage 230a (ou axe de verrouillage) est dans la première position (i.e. en butée) jusqu'à un deuxième état pour lequel le premier élément de verrouillage 230a (ou axe de verrouillage) est dans une deuxième position, la deuxième position permettant d'aligner une ou une pluralité de dents avec une ou une pluralité d'encoches respectives afin de libérer la rotation forcée de l'axe de pivotement.

Dans ce but, la partie fixe peut comprendre un bras de levier 270 monté pivotant (description suivant un axe, transverse à l'axe pivotement), suivant un axe qui peut être typiquement orthogonal à l'axe de pivotement 120. Une première extrémité 270a du bras de levier 270 peut être configurée pour coopérer avec l'actionneur motorisé 250 et une deuxième extrémité 270b peut être configurée pour coopérer avec le premier élément de verrouillage (ou l'axe de verrouillage). Le bras de levier peut être configuré pour déplacer le premier élément de verrouillage de la première à la deuxième position par déplacement de la première extrémité du bras de levier par ledit actionneur motorisé. Selon un exemple, l'actionneur et la première extrémité du bras de levier peuvent coopérer en simple appuie.

Selon un ou plusieurs exemples, la deuxième extrémité 270b du bras de levier peut comprendre en outre une saillie 270b1, et le corps de verrouillage compris dans le premier élément verrouillage peut comprendre au moins une deuxième encoche 230a4 (ou au moins une troisième encoche lorsque deux encoches sont utilisées avec deux dents) en prise avec la saillie 270b1 (ou en butée).

Lorsque de l'actionnement de l'actionneur 250, celui-ci peut déplacer, par exemple par une poussée, à l'aide d'une vis ou d'une tige déplaçable transversalement au bras de levier par exemple, la première extrémité 270a du bras levier, entrainant alors le déplacement de la deuxième extrémité 270b par rotation autour du point pivot du bras de levier, et ainsi entrainer le déplacement, par exemple une translation, du corps de verrouillage 230a1 de la première à la deuxième position par l'intermédiaire de la saille en prise avec l'encoche du corps de verrouillage.

Par exemple, l'actionneur permettant de provoquer le passage de la partie mobile de la position d'utilisation jusqu'à la position de rangement peut être commandé depuis l'interface utilisateur du véhicule accessible de l'occupant du siège conducteur.

En outre, dans un ou plusieurs modes de réalisations, l'actionneur motorisé peut être réversible, et le premier élément de verrouillage peut être contraint en déplacement par un deuxième moyen élastique 280, par exemple un ressort comme un ressort de rappel, de la deuxième position jusqu'à la première position qui provoque à son tour la réversibilité de l'actionneur du deuxième état jusqu'au premier état.

Dans un ou plusieurs modes de réalisations, la réversibilité de l'actionneur du deuxième état jusqu'au premier état peut être mise en oeuvre par un ressort interne, par exemple un ressort de rappel, audit actionneur motorisé. Selon ou un plusieurs exemples, l'actionneur motorisé peut être un actionneur électrique comprenant un coulisseau actionné par un électro-aimant et rappeler par un ressort interne à l'actionneur motorisé.

Par exemple, le deuxième moyen élastique 280 peut être monté autour de l'axe verrouillage 230a2 et configuré pour fonctionner en compression. Une première extrémité du deuxième moyen élastique peut être en appui sur une des parois de la partie fixe, et la deuxième extrémité du deuxième moyen élastique peut être en appui sur une des extrémités du corps de verrouillage 230a1 de sorte que le deuxième moyen élastique peut être compressé lors du déplacement du corps de verrouillage (i.e. le premier élément de verrouillage de la première à la deuxième position.

En outre, le premier élément de verrouillage 230a, le deuxième élément de verrouillage 230b, l'axe de pivotement 120 et l'actionneur motorisé 250, voire le cas échéant le bras de levier peuvent être agencés en recouvrement suivant la direction de l'axe de pivotement entre les deux parois 130a, 130b de la partie fixe. Un tel agencement en recouvrement permet d'obtenir un système support compact dans lequel tous les éléments structurels sont intégrés dans la partie fixe du système support.

Les figures 3a et 3b illustrent le système support en position de rangement.

La figure 3a illustre une vue en perspective du système support en de rangement et la figure 3b illustre une vue de face du système support en position de rangement.

À noter que certaines parties de la figure 1 (e.g. parois) présentant le système support en perspective sont volontairement cachées afin de faciliter la compréhension de la structure.

En position de rangement, le premier élément de verrouillage 230a, i.e. l'axe de verrouillage (ou le corps de verrouillage), est en deuxième position suite au déplacement du premier élément de verrouillage, par exemple par l'actionneur 250 et le bras de levier 270, et la partie mobile a pivoté autour de la partie fixe via la rotation de l'axe de pivotement contraint en rotation par le premier moyen élastique 220.

En outre, le deuxième élément de verrouillage 230b après la rotation de l'axe de pivotement peut former une butée pour le premier élément de verrouillage 230a dans la position de rangement en assurant le blocage en translation du premier élément de verrouillage 230a, par exemple le corps de verrouillage 230a1, en s'opposant au deuxième moyen élastique 280, par exemple un ressort comme un ressort de rappel, jusqu'à la première position.

Dans ce but, au moins une dent 230b1 du deuxième élément de verrouillage 230b peut être en butée ou appui simple avec au moins une encoche 230a3, comprise dans le corps de verrouillage 230a1 par exemple, de manière à empêcher le relâchement du deuxième moyen élastique 280.

Lors de la rotation de l'axe de pivotement de la position de rangement à la position d'utilisation, l'au moins une dent 230b1 revient à position d'origine en retraversant l'au moins une encoche 230a3, libérant le relâchement du deuxième moyen élastique et permettant translater le corps de verrouillage vers la position de maintien pour la position d'utilisation, c'est-à-dire lorsque le corps de verrouillage est en buté avec l'au moins une dent (empêchant la rotation de l'axe de pivotement de la position d'utilisation à la position de rangement).

Selon un exemple, la rotation de l'axe de pivotement de la position de rangement à la position d'utilisation peut être effectuée manuellement par la rotation d'au moins un bras (solidaire de l'axe de pivotement) par un utilisateur, par exemple un occupant du véhicule.

## Revendications

1. Système support (105) pour appui-tête (103) d'un siège d'un véhicule automobile, ledit système support étant destiné à être intégré en haut d'un dossier de siège (100a) dudit véhicule, le système support comprenant une partie fixe (105a) solidaire du dossier et une partie mobile (105b) en rotation (107) autour de la partie fixe entre une position d'utilisation et position de rangement,
la partie mobile comprenant au moins un bras (110) configuré pour fixer ledit appui-tête, et un axe de pivotement (120) solidaire en rotation avec ledit au moins un bras, l'axe de pivotement étant contraint en rotation par un premier moyen élastique (220) de la position d'utilisation à la position de rangement,
la partie fixe comprenant :
- un dispositif de verrouillage (230) configuré pour bloquer la partie mobile dans la position d'utilisation, le dispositif de verrouillage comprend un premier élément (230a) de verrouillage solidaire de la partie fixe et un deuxième de verrouillage (230b) solidaire en rotation de l'axe de pivotement (120), ledit premier élément de verrouillage configuré pour passer d'une première position dans laquelle ledit premier élément de verrouillage forme une butée pour le deuxième élément de verrouillage dans la position d'utilisation en assurant le blocage en rotation de l'axe de pivotement en s'opposant au premier moyen élastique jusqu'à une deuxième position dans laquelle le premier élément de verrouillage libère la rotation de l'axe de pivotement provoquant la rotation de la partie mobile autour de la partie fixe par le premier moyen élastique jusqu'à ladite position de rangement,
- un actionneur (250) motorisé configuré pour effectuer un déplacement du premier élément de verrouillage de la première à la deuxième position.

2. Système selon la revendication 1, dans lequel ledit premier élément de verrouillage est un axe de verrouillage, orienté sensiblement suivant une direction parallèle à l'axe de pivotement, configuré pour coulisser suivant la direction de l'axe de verrouillage depuis la première position jusqu'à la deuxième position, et inversement.

3. Système Support selon l'une des revendications 1 à 2, dans lequel le deuxième élément de verrouillage comprend au moins une dent (230b1) et le premier élément de verrouillage est un corps de verrouillage (230a1) mobile entre la première et la deuxième position sur l'axe de verrouillage (230a2), le corps de verrouillage formant la butée pour la position d'utilisation et comprenant au moins une encoche (230a3), ladite au moins une dent (230b1) traversant par alignement ladite au moins une encoche lors du passage de la première à la deuxième position .

4. Système support selon l'une des revendications 1 à 3 dans lequel, la partie fixe comprend un bras de levier (270) monté pivotant, une première extrémité (270a) du bras de levier coopérant avec l'actionneur motorisé et une deuxième extrémité (270b) étant engagé avec le premier élément de verrouillage, le cas échéant l'axe de verrouillage lorsque le système est selon la revendication 2, ledit bras de levier est configuré pour déplacer le premier élément de verrouillage de la première à la deuxième position par déplacement de la première extrémité du bras de levier par ledit actionneur motorisé.

5. Système support selon l'une des revendications précédentes 1 à 4, dans lequel ledit actionneur motorisé est configuré pour passer d'un premier état dans lequel ledit premier élément de verrouillage est dans la première position jusqu'à un deuxième état pour lequel le premier élément de verrouillage est dans une deuxième position, et dans lequel le premier élément de verrouillage, le cas échéant l'axe de verrouillage lorsque le système est selon la revendication 2, est contraint en déplacement par un deuxième moyen élastique (280) de la deuxième position jusqu'à la première position qui provoque éventuellement à son tour la réversibilité de l'actionneur du deuxième état jusqu'au premier état, le cas échéant par le bras de levier lorsque le système est selon la revendication 4,
le premier élément de verrouillage étant déplacé par le deuxième moyen élastique de la deuxième à la première position lors de la rotation de l'axe de pivotement de la position de rangement à la position d'utilisation.

6. Système support selon la revendication 5 dans lequel la rotation de l'axe de pivotement est mise en oeuvre par un pivotement manuel dudit au moins un bras de levier de la position de rangement à la position d'utilisation.

7. Système selon la revendication 4 ou 5, dans lequel l'actionneur et la première extrémité du bras de levier coopèrent en simple appuie.

8. Système support selon l'une quelconque des revendications 1 à 7, dans lequel la partie fixe comprend deux parois (130a, 130b) entre lesquelles l'axe de pivotement (120) est articulé à ses extrémités, le premier élément de verrouillage (230a), le deuxième élément de verrouillage (230b), l'axe de pivotement (120) et l'actionneur motorisé (250), voire le cas échéant le bras de levier lorsque selon le système de la revendication 4, étant agencés en recouvrement suivant la direction de l'axe de pivotement entre les deux parois da la partie fixe.

9. Système support selon la revendication 4 seule ou prise en combinaison avec l'une quelconque des revendications 2 et 3 ou 5 à 8, dans lequel la deuxième extrémité (270b) du bras de levier comprend une saillie (270b1) et le premier élément verrouillage comprend au moins une deuxième encoche (230a4) en prise avec ladite saillie, le déplacement de ladite saillie par l'actionneur motorisé déplace le deuxième élément de verrouillage de la première à la deuxième position.

10. Système support selon l'une quelconque des revendications 5 à 9, dans lequel la réversibilité de l'actionneur du deuxième état jusqu'au premier état est mise en oeuvre par un ressort interne audit actionneur motorisé.

11. Système support selon la revendication 10 dans lequel l'actionneur motorisé est un actionneur électrique comprenant un coulisseau actionné par un électro-aimant et rappeler par un ressort interne audit actionneur électrique.

12. Siège de véhicule (100) comprenant une assise (100b) et un dossier (100a), ainsi qu'un système support selon l'une quelconque des revendications précédentes 1 à 11 comprenant la partie fixe solidaire d'une portion haute du dossier, ladite partie mobile supportant au moins un appui-tête.

13. Siège selon la revendication 12, dans lequel le bras de levier est courbe de sorte que l'appui-tête s'échappe en dessous de l'extrémité supérieure du dossier dans la position de rangement de la partie mobile.

14. Véhicule comportant :
- un siège conducteur (100) et
- au moins un siège selon la revendication 12 ou 13 sur une rangée en arrière du siège conducteur,
- une interface utilisateur accessible de l'occupant du siège conducteur configurée pour assurer la commande de l'actionneur pour provoquer le passage de la partie mobile de la position d'utilisation jusqu'à la position de rangement.
